# NEUE EUROPÄISCHE PATENTSCHRIFT

(11) **EP 1 718 475 B2**
(45) Veröffentlichungstag und Bekanntmachung des Hinweises auf die Entscheidung über den Einspruch: **01.07.2015**
(45) Hinweis auf die Patenterteilung: 11.04.2012
(21) Anmeldenummer: 05715367.8
(22) Anmeldetag: 16.02.2005
(51) Int. Cl.: G07D 7/20, G07D 7/12, G07D 7/00, B42D 25/00

(54) **SICHERHEITSELEMENT MIT LINSENRASTER UND VERFAHREN ZU SEINER HERSTELLUNG**
SECURITY ELEMENT COMPRISING A LENS GRID AND METHOD FOR THE PRODUCTION THEREOF
ELEMENT DE SECURITE A GAUFRAGE ET SON PROCEDE DE FABRICATION

(30) Priorität: 18.02.2004 DE 102004007909; 04.08.2004 DE 102004037825
(43) Veröffentlichungstag der Anmeldung: 08.11.2006
(73) Patentinhaber: Giesecke & Devrient GmbH, 81677 München (DE)
(72) Erfinder: MENZ, Irina, 85630 Grasbrunn (DE)
(74) Vertreter: Zeuner, Stefan
(86) Internationale Anmeldenummer: PCT/EP2005/001602
(87) Internationale Veröffentlichungsnummer: WO 2005/082639

(56) Entgegenhaltungen:
- EP-A- 0 219 012
- EP-A- 1 046 515
- EP-A- 1 283 103
- EP-A1- 1 046 515
- EP-A1- 1 283 103
- WO-A-82/04132
- WO-A-99/39221
- WO-A1-03/079092
- WO-A2-99/39221
- DE-A1- 19 729 918
- GB-A- 191 229 491
- US-A- 3 434 414
- US-A- 4 417 784
- US-A1- 2003 183 695
- US-B1- 6 301 363

## Beschreibung

Die Erfindung betrifft ein Sicherheitselement für Sicherheitspapiere und Wertdokumente mit einer transparenten oder transluzenten Folie. Die Erfindung betrifft ferner ein Verfahren zum Herstellen eines derartigen Sicherheitselements, eine Sicherheitsanordnung, die neben einem solchen Sicherheitselement ein entsprechend angepasstes Decodierelement umfasst, sowie einen Datenträger, der mit einem solchen Sicherheitselement oder einer solchen Sicherheitsanordnung ausgestattet ist. Die Erfindung enthält auch ein Verfahren zur Prüfung der Echtheit des genannten Sicherheitselements.

Zur Erhöhung ihrer Fälschungssicherheit sind Wertdokumente, wie beispielsweise Banknoten, Aktien, Anleihen, Urkunden, Gutscheine, Schecks, hochwertige Eintrittskarten, aber auch andere fälschungsgefährdete Papiere, wie Pässe oder sonstige Ausweisdokumente, in der Regel mit Sicherheitselementen ausgestattet, deren Echtheit bzw. Integrität visuell oder maschinell überprüft werden kann.

Hologramme oder hologrammähnliche Beugungsstrukturen stellen seit einigen Jahren einen wirksamen Fälschungs- und Kopierschutz bei Wertpapieren dar. Allerdings sind bereits Hologrammfälschungen aufgetreten und in Umlauf gesetzt worden. Dabei ist es für den Laien oftmals schwer, ein nachgestelltes von einem echten Hologramm zu unterscheiden.

Es sind auch drucktechnische Anwendungen im Banknotenbereich bekannt, bei denen schwer kopierbare Informationen im Druckdesign verschlüsselt sind. Die Informationen können mit einem speziellen Lentikularlinienraster verifiziert werden, welches zur Prüfung der Banknote vorliegen muss. Mit hochauflösenden Kopiergeräten kann die verschlüsselte Information jedoch dennoch kopiert werden. Darüber hinaus werden zum Drukken der versteckten Information mit gleich bleibend hoher Druckqualität Druckmaschinen höchster Auflösung und Qualität benötigt, um eine gute Auslesbarkeit der Information zu gewährleisten.

Die Druckschrift EP 0 219 012 A1 beschreibt eine Ausweiskarte mit einer partiellen Linsenrasterstruktur. Durch diese Linsenstruktur werden mit einem Laser unter verschiedenen Winkeln Informationen in die Karte eingeschrieben. Diese Informationen können anschließend auch nur unter diesem Winkel erkannt werden, so dass beim Kippen der Karte die unterschiedlichen Informationen erscheinen.

Die Druckschrift WO-A-82/04132 betrifft eine Verifikationsvorrichtung mit einer transparenten Linsenplatte mit parallelen Linsenreihen. Die Linsenreihen sind in Hintergrundbereichen der Linsenplatte regelmäßig angeordnet und in bestimmten Bildbereichen aus der regelmäßigen Anordnung heraus verschoben, um ein Muster unregelmäßig angeordneter Linsen zu bilden.

Ausgehend davon liegt der Erfindung die Aufgabe zugrunde, ein Sicherheitselement der eingangs genannten Art mit erhöhter Fälschungssicherheit anzugeben. Darüber hinaus soll das Sicherheitselement eine einfache und zuverlässige Echtheitsprüfung gestatten.

Diese Aufgabe wird durch das Sicherheitselement mit den Merkmalen des Hauptanspruchs gelöst. Ein Verfahren zu seiner Herstellung, eine Sicherheitsanordnung, ein Datenträger und ein Prüfverfahren für das Sicherheitselement sind in den nebengeordneten Ansprüchen angegeben. Weiterbildungen der Erfindung sind Gegenstand der Unteransprüche.

Gemäß der Erfindung enthält ein gattungsgemäßes Sicherheitselement eine transparente Folie mit einem Oberflächenrelief in Form eines Linsenrasters, das einen Codierungsbereich aufweist, in dem die optischen Eigenschaften des Linsenrasters von den optischen Eigenschaften des Linsenrasters außerhalb des Codierungsbereichs abweichen, und bei dem die Rasterelemente des Linsenrasters eine lang gestreckte Form mit einer longitudinalen Achse aufweisen. Dabei enthält das Linsenraster an verschiedenen Stellen Rasterelemente mit unterschiedlicher Ausrichtung der longitudinalen Achse.

Im Rahmen der vorliegenden Beschreibung bezeichnet der Begriff "Transparenz" die volle Durchsichtigkeit eines Materials, "transluzent" bedeutet durchscheinend im Sinn einer gewissen Lichtdurchlässigkeit, wobei jedoch anders als bei transparenten Materialien hinter transluzenten Materialien befindliche Objekte diffus oder gar nicht erkennbar sind.

Über die veränderten optischen Eigenschaften des Codierungsbereichs lassen sich Informationen aller Art in die Folie selbst einbringen und unter gewissen Betrachtungs- oder Beleuchtungsbedingungen oder mit einem geeigneten Auslesegerät sichtbar machen. Insbesondere können die in die Folie selbst eingebrachten Informationen direkt kaum wahrnehmbar sein und erst im Zusammenspiel mit einem geeigneten Decodierelement sichtbar werden.

Darüber hinaus kann die Echtheit des Sicherheitselements bei geeigneter Ausgestaltung der Folie, rasch maschinell überprüft werden, beispielsweise durch die charakteristischen Beugungseigenschaften eines in die Folie eingebrachten Linsenrasters.

Durch die Erfindung wird somit zum einen erreicht, dass auch der Bürger ohne aufwändige Hilfsmittel und objektiver als bisher Banknoten und Wertpapiere auf Echtheit prüfen kann, zum anderen erhalten Banken eine weitere maschinelle Prüfmöglichkeit zur Wertpapierprüfung, so dass sich insgesamt das Sicherheitsniveau von Banknoten und Wertpapieren signifikant erhöhen lässt.

Bevorzugt stellt die Gestalt, insbesondere Form oder Umriss, des Codierungsbereichs eine Information, wie ein Muster oder eine Zeichenfolge, dar. Beispielsweise kann der Codierungsbereich eine Kennziffer, eine Seriennummer, ein Logo oder ein anderes graphisches Symbol bilden.

Bei der Erfindung weisen die Rasterelemente des Linsenrasters eine lang gestreckte Form mit einer longitudinalen Achse auf: Insbesondere können die Rasterelemente durch gerade oder gekrümmte Zylinderlinsen gebildet sein. Auch andere lang gestreckte Formen, etwa Ellipsensegmente, kommen in Betracht. Wichtig ist bei dieser Ausgestaltung lediglich, dass eine Vorzugsrichtung der Rasterelemente existiert, deren Orientierung zur Echtheitsprüfung herangezogen werden kann.

Um unterschiedliche optische Eigenschaften zu erzielen, sind die Rasterelemente des Linsenrasters im Codierungsbereich gegenüber den außerhalb des Codierungsbereichs liegenden Rasterelementen versetzt angeordnet. Dabei sind die Rasterelemente im Codierrungsbereich in einer Richtung senkrecht zu ihrer longitudinalen Achse um d/4 bis 3d/4, bevorzugt um etwa d/ 2 gegenüber den außerhalb des Codierungsbereichs liegenden Rasterelementen versetzt angeordnet. Dabei stellt d den typischen Abstand der Rasterelemente senkrecht zur longitudinalen Achse dar.

Vorzugsweise weisen die Rasterelemente einen typischen Abstand d senkrecht zur longitudinalen Achse von 40 µm bis 500 µm, besonders bevorzugt von 80 µm bis 200 µm auf. Bei diesen kleinen Rasterperioden lässt sich die Versetzung des Linsenrasters im Codierungsbereich nur sehr schwer direkt erkennen. Die Strukturtiefen des Linsenrasters liegen vorteilhaft zwischen 2 µm und 30 µm, bevorzugt zwischen 5 µm und 15 µm, besonders bevorzugt bei etwa 10 µm.

Bei der Erfindung enthält das Linsenraster an verschiedenen Stellen Rasterelemente mit unterschiedlicher Ausrichtung der longitudinalen Achse. Insbesondere kann das Linsenraster als Rasterelemente Zylinderlinsen umfassen, die in der Ebene des Linsenrasters gekrümmt sind. Vorzugsweise setzt sich dabei die Krümmung der einzelnen Elemente entlang der longitudinalen Achsen fort, so dass großräumig ein deutlicher Unterschied in der Ausrichtung der Rasterelemente entsteht.

Das Linsenraster kann als Rasterelemente alternativ oder zusätzlich auch gerade Zylinderlinsen mit unterschiedlich ausgerichteten longitudinalen Achsen umfassen.

Diese Maßnahme bietet unter anderem den Vorteil, dass die ins Wertpapier integrierte transparente Fensterfolie sich von herkömmlichen und vergleichsweise leicht erhältlichen Lentikularfolien verifizierbar unterscheidet. Sie kann auch nicht mit einem semitransparenten Druck auf eine transparente Folie nachgestellt werden, so dass sie eine erhöhte Fälschungssicherheit für den Bürger bietet.

Als weiterer Vorteil ist anzusehen, dass die enthaltene Information nicht mehr (nur) im Wertpapierdruck versteckt ist, wo sie mit hochauflösenden Kopiergeräten für Fälscher zugänglich sein kann, sondern dass sich die Information in der schwer nachzumachenden transparenten Lentikularfolie selbst befindet.

Die geraden oder gekrümmten Zylinderlinsen weisen zweckmäßig eine Breite, also eine Ausdehnung senkrecht zur longitudinalen Achse, von 20 µm bis 250 µm, bevorzugt von 40 µm bis 150 µm auf. Es versteht sich, dass die Breite der Zylinderlinsen und der oben genannte Abstand der Linsen mit Vorteil aufeinander abgestimmt sind.

In einer vorteilhaften Ausgestaltung ist die transparente Folie des Sicherheitselements durch eine Kunststofffolie, insbesondere eine PET-Folie, gebildet. Auf den Codierungsbereich ist vorzugsweise eine hochbrechende Dielektrikumsschicht aufgebracht. Um eine Oberflächenabformung des Codierungsbereichs zu verhindern, ist dieser mit Vorteil mit einer Schutzlackschicht versehen.

Die Information des Codierungsbereichs des Sicherheitselements ist mit Vorteil nur unter speziellen Auslesebedingungen erkennbar, und wird daher im Folgenden als versteckte Information bezeichnet. Zusätzlich zu dieser versteckten Information kann in einer Weiterbildung der Erfindung zur weiteren Erhöhung der Fälschungs- und Kopiersicherheit eine unter gewöhnlichen Auslesebedingungen erkennbare, beugungsoptische Information auf dem Sicherheitselement vorgesehen sein, welche im Gegensatz zu der versteckten Information nachfolgend als offene Information bezeichnet wird. Die beugungsoptische Information liegt beispielsweise als ein Hologramm, ein holographisches Gitterbild oder eine andere hologrammähnliche Beugungsstruktur vor. Besonders zweckmäßig ist es, wenn sich die offene beugungsoptische Information im Wesentlichen über die gesamte Fläche des Sicherheitselements erstreckt.

In einer vorteilhaften Ausgestaltung der Erfindung liegt die offene beugungsoptische Information in einer transparenten Folie vor, die zusammen mit der den Codierungsbereich enthaltenden Folie einen Folienverbund bildet. Für diese transparente Folie bieten sich vor allem transparente holographische Prägefolien, insbesondere Heißprägefolien oder holographische Laminatfolien, an.

In Verbindung mit der oben beschriebenen, vorteilhaften Ausgestaltung des Sicherheitselements mit einem Linsenraster kann die transparente Folie auf das Linsenraster-Oberflächenrelief aufgebracht, insbesondere über eine Klebeschicht aufgeklebt sein. Die holographische Folie verhindert dann zum einen eine Abformung des Linsenrasters und stellt zum anderen selbst ein schwer zu fälschendes Sicherheitsmerkmal dar. Insbesondere kann der Folienverbund nicht ohne eine auffällige und auch vom Laien leicht zu erkennende Zerstörung der offenen beugungsoptischen Information getrennt werden.

Die Klebeschicht weist vorzugsweise einen Brechungsindex auf, der sich vom Brechungsindex des Linsenraster-Oberflächenreliefs um 0,01 oder mehr, bevorzugt um 0,02 oder mehr, unterscheidet.

Die Erfindung umfasst auch ein Verfahren zum Herstellen eines Sicherheitselements der beschriebenen Art, bei dem in eine transparente Folie ein Oberflächenrelief in Form eines Linsenrasters eingebracht wird, welches einen Codierungsbereich aufweist, in dem die optischen Eigenschaften des Linsenrasters von den optischen Eigenschaften des Linsenrasters außerhalb des Codierungsbereichs abweichen, und bei dem die Rasterelemente des Linsenrasters mit einer lang gestreckten Form mit einer longitudinalen Achse ausgebildet werden, wobei das Linsenraster an verschiedenen Stellen mit Rasterelementen mit unterschiedlicher Ausrichtung der longitudinalen Achse ausgebildet wird.

Das Linsenraster wird dabei vorzugsweise photolithographisch oder elektronenstrahllithographisch in einer Photoresistschicht erstellt und mit einem Folienprägeverfahren in eine prägbare Folie übertragen. Falls das Linsenraster in einem mehrschichtigen Datenträger, wie eine aus mehreren Kunststoffschichten bestehende Karte, insbesondere Ausweis- oder Kreditkarte, eingebracht wird, kann das Linsenraster auch in der Kaschierplatte vorgesehen sein, mit welcher die Schichten des Datenträgers laminiert werden. Auf diese Weise wird das Linsenraster während des Kaschierprozesses des Datenträgers mit übertragen. Vorzugsweise wird die Linsenstruktur so in die transparente Folie eingebracht, dass die Scheitelbereiche der Linsen in etwa bündig mit der umgebenden Folie abschließen.

Gemäß einer vorteilhaften Verfahrensgestaltung wird das Linsenraster mittels UV-Lackauftrag auf eine Mehrzahl von Folien unter gleichzeitiger oder nachfolgender UV-Lichtaushärtung massenproduktionstechnisch abgeformt.

Abschließend kann die Folie mit einer hochbrechenden Dielektrikumsschicht beschichtet und mit einer Schutzlackschicht versehen werden, die eine Oberflächenabformung des Codierungsbereichs, insbesondere eines Linsenrasters, verhindert.

Bei allen beschriebenen Verfahren kann in den Codierungsbereich eine nur unter speziellen Auslesebedingungen erkennbare, versteckte Information eingebracht werden. Zusätzlich kann eine unter gewöhnlichen Auslesebedingungen erkennbare, offene beugungsoptische Information eingebracht werden.

Die offene beugungsoptische Information kann dazu in eine transparente Folie eingebracht, und ein Folienverbund aus der den Codierungsbereich enthaltenden Folie und der die beugungsoptische Information enthaltenden Folie gebildet werden.

In Verbindung mit den oben geschilderten Sicherheitselementen mit Linsenraster wird deren Linsenraster-Oberflächenrelief mit besonderem Vorteil mit einer Klebefolie versiegelt, die die offene beugungsoptische Information enthält. Die Klebefolie ist dabei zweckmäßig durch eine holographische Prägefolie, insbesondere eine holographische Heißprägefolie, mit einer hochbrechenden Schicht gebildet. Typischerweise enthält die holographische Prägefolie eine Trägerfolie, die mit Vorteil nach dem Versiegeln des Linsenraster-Oberflächenreliefs abgezogen wird. Alternativ kann die Klebefolie auch heiß oder kalt auf das Linsenraster-Oberflächenrelief laminiert werden.

Die Erfindung umfasst ferner eine Sicherheitsanordnung für Sicherheitspapiere und Wertdokumente mit einem Sicherheitselement der beschriebenen Art oder einem nach dem beschriebenen Verfahren herstellbaren Sicherheitselement sowie einem Decodierelement mit einem Decodierbereich, der so auf das Linsenraster des Sicherheitselements abgestimmt ist, dass eine in dem Codierungsbereich des Sicherheitselements enthaltene Information durch Auflegen des Linsenrasters auf den Decodierbereich auslesbar ist.

Der Decodierbereich des Decodierelements umfasst dabei vorzugsweise eine Druckschicht oder eine Beugungsstruktur. Insbesondere enthält der Decodierbereich des Decodierelements ein Rastermuster, das dem Linsenraster des Sicherheitselements, allerdings ohne die Abweichungen durch den informationstragenden Codierungsbereich, entspricht. Aufgrund der abweichenden optischen Eigenschaften des Linsenrasters im Codierungsbereich tritt die darin eingeschriebene Information beim Auflegen auf den angepassten Decodierbereich deutlich hervor.

Die Erfindung enthält weiter einen Datenträger, insbesondere ein Wertdokument, wie eine Banknote oder Ausweiskarte, welcher mit einem Sicherheitselement der beschriebenen Art ausgestattet ist. Das Sicherheitselement ist dabei in einem transparenten Bereich des Datenträgers angeordnet. Beispielsweise kann das Sicherheitselement so in ein Substrat eingebettet sein, so dass sich die Transparenz des Datenträgers in diesem Bereich aus der Transparenz des Sicherheitselements selbst ergibt. Das Sicherheitselement kann auch über einem Loch oder einem Fensterbereich des Datenträgers angebracht sein.

In einer vorteilhaften Ausgestaltung ist der Datenträger mit einer Sicherheitsanordnung der beschriebenen Art ausgestattet. Der Datenträger ist in diesem Fall vorzugsweise flexibel, so dass das Linsenraster des Sicherheitselements zum Auslesen der enthaltenen Information durch Biegen oder Falten des Datenträgers auf den Decodierbereich des Decodierelements auflegbar ist, der sich ebenfalls auf dem Datenträger befindet. Ist der Datenträger starr, kann zum Auslesen des Sicherheitselements der Decodierbereich eines anderen gleichartigen Datenträgers verwendet werden.

Um die Fälschungssicherheit weiter zu erhöhen, kann der Decodierbereich taktil fühlbar ausgestaltet sein. Vorzugsweise wird der Decodierbereich hierbei im Stichtiefdruckverfahren erzeugt.

Bei einem Verfahren zur Echtheitsprüfung eines Sicherheitselements der beschriebenen Art wird
- das Linsenraster des Sicherheitselements mit einem Lichtstrahl, insbesondere einem Laserstrahl, beaufschlagt bzw. durchleuchtet,
- der durch das Linsenraster gebeugte oder gebrochene Lichtstrahl aufgefangen, und
- auf Grundlage von Form, Lage, und/oder Orientierung des aufgefangenen Lichtstrahls die Echtheit des Sicherheitselements beurteilt.

Vorteilhaft wird dabei das Linsenraster an verschiedenen Stellen mit dem Lichtstrahl beaufschlagt, beispielsweise kann der Laserstrahl über das Linsenraster geschwenkt werden. Die Echtheit des Sicherheitselements wird dann aufgrund einer sich in für das Sicherheitselement charakteristischer Weise ändernden Form, Lage und/oder Orientierung des aufgefangenen Lichtstrahls beurteilt.

Dieses Verfahren gibt den Banken eine im Vergleich zu herkömmlichen Prüfmethoden zur Echtheitsbestimmung von Hologrammen mittels Kameradetektion kostengünstige, schnelle und zuverlässige Prüfmethode an die Hand, mit der Fälschungen schnell und zuverlässig erkannt und aussortiert werden können.

Insgesamt nutzt die Erfindung unter anderem die Erkenntnis, dass es möglich ist, Linsenraster, die nicht nur aus geraden Zylinderlinsen oder geraden Zylinderlinsenanordnungen bestehen, sondern auch von der Geraden abweichende, beispielsweise gekrümmte oder gewinkelte Linsenformen enthalten, photolithographisch oder elektronenstrahllithographisch herzustellen und durch Prägen oder UV-Casting in Folien zu vervielfältigen. Solche Linsenraster beugen bzw. brechen einen Laserstrahl, im Gegensatz zu einheitlich geradlinig aufgebauten Linsensrastern, an verschiedenen Stellen mit unterschiedlicher Orientierung. Diese Eigenschaft kann als detektierbares Sicherheitsmerkmal für den Fälschungsschutz von Wertpapieren genutzt werden.

Die einfache Detektierbarkeit, beispielsweise mittels eines Laserpointers, geht auch dann nicht verloren, wenn Flächen, deren Konturen eine Information bilden, im Raster aufgebaut sind, und das Raster innerhalb dieser Flächen versetzt zum Raster außerhalb dieser Flächen angeordnet ist. Diese, im Raster verborgene Information kann mit derselben Qualität ausgelesen werden, wie bei bekannten Gestaltungen, bei der die verborgene Information im Druckbild verborgen ist und die transparente Linsenrasterfolie lediglich als Decodierfolie fungiert.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
Fig. 1 eine schematische Darstellung einer Banknote mit inem eingebetteten Sicherheitselement,
Fig. 2 das Sicherheitselement der Fig.1 im Detail,
Fig. 3 eine schematische Darstellung einer Banknote mit einem eingebetteten Sicherheitselement und einem aufgedruckten Decodierelement nach einem Ausführungsbeispiel der Erfindung,
Fig. 4 eine Seitenansicht der Banknote von Fig. 3 so gefaltet, dass das Sicherheitselement auf dem Decodierelement aufliegt,
Fig. 5 eine Aufsicht auf die gefaltete Banknote von Fig. 4, mit der durch das Auflegen lesbar gemachten Information des Sicherheitselements,
Fig. 6 das Sicherheitselement der Figuren 3 und 4 im Detail,
Fig. 7 das Decodierelement der Figuren 3 und 4 im Detail,
Fig. 8 einen Querschnitt durch das auf dem Decodierbereich von Fig. 7 aufliegende Linsenraster der Fig. 6 im Bereich des Übergangs in den Codierungsbereich,
Fig. 9 ein Sicherheitselement aus einem Folienverbund nach einem weiteren Ausführungsbeispiel der Erfindung,
Fig. 10 einen Querschnitt durch das Sicherheitselement der Fig. 9,
Fig. 11 ein Sicherheitselement wie in Fig. 6 nach einem anderen Ausführungsbeispiel der Erfindung,
Fig. 12 eine Chipkarte mit einem eingebetteten Sicherheitselement und ein separates Decodierelement nach einem weiteren Ausführungsbeispiel der Erfindung, und
Fig. 13 das Prinzip der Echtheitsprüfung bei einem Sicherheitselement mit einem gekrümmten oder gewinkelten Linsenraster.

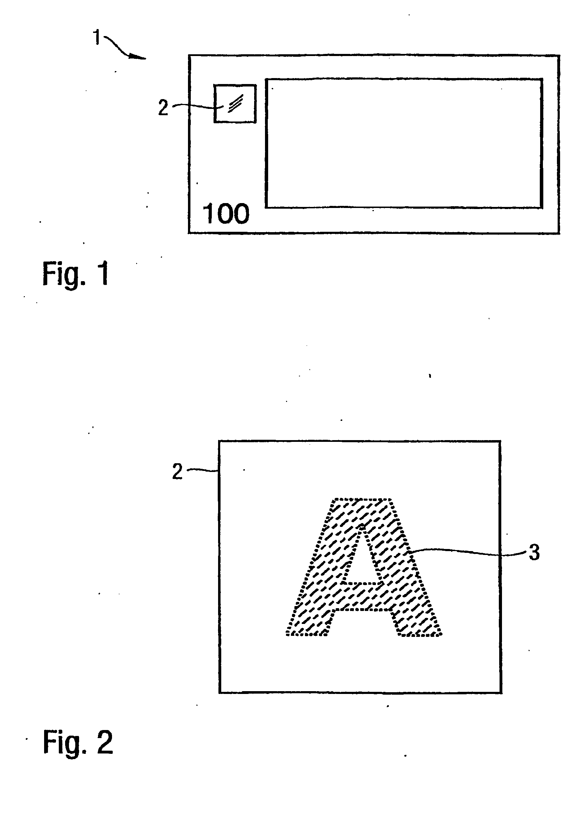

Die Erfindung wird nachfolgend zunächst am Beispiel einer Banknote erläutert. Fig. 1 zeigt eine schematische Darstellung einer Banknote 1, die in einem seitlichen Teilbereich mit einem etwa 1 x 1 cm² großen Sicherheitselement 2 versehen ist. Das in Fig. 2 genauer dargestellte Sicherheitselement 2 besteht aus einer transparenten PET-Folie einer Dicke von etwa 100 µm In einem Codierungsbereich 3 ist die PET-Folie durch einen Ätzprozess aufgeraut. Die Gestalt, insbesondere Form oder Umriss des Codierungsbereichs 3, stellt eine bestimmte Information, beispielsweise ein Muster der eine alphanumerische Zeichenfolge, dar. In Fig. 2 ist der Codierungsbereich 3 zur Illustration lediglich in Form des Buchstabens "A" ausgebildet.

Durch die Aufrauung des Codierungsbereichs 3 weist dieser von der umgebenden, klaren Folie abweichende optische Eigenschaften auf, die es ermöglichen, den Informationsgehalt des Codierungsbereichs 3 beispielsweise im Durchlicht oder beim Auflegen der Banknote auf eine geeignete Unterlage zu erkennen. Je nach Stärke der Aufrauung ist die PET-Folie im Codierungsbereich 3 noch transparent oder - bei stärkerer Aufrauung - bereits transluzent.

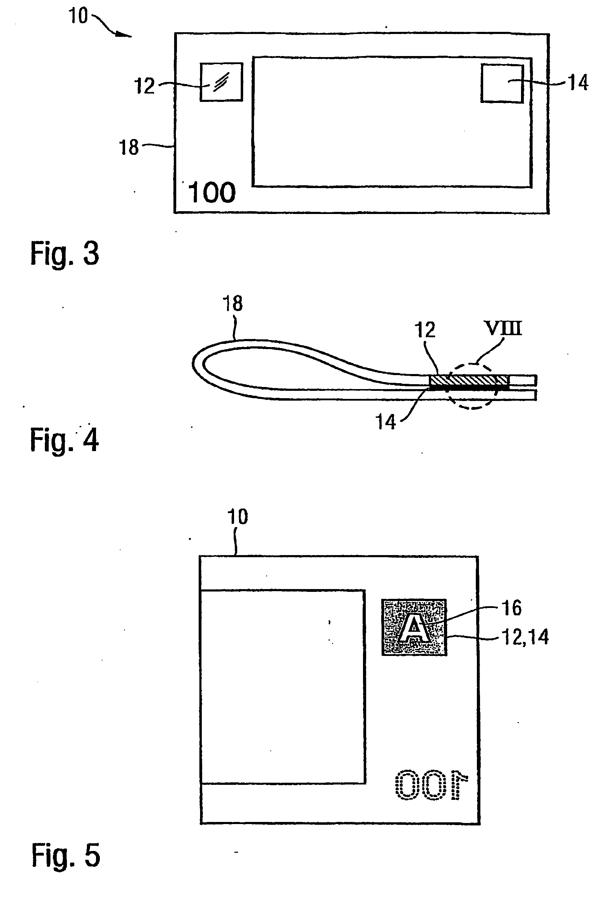

Ein komplexeres Ausführungsbeispiel wird nun mit Bezug auf die Figuren 3 bis 8 erläutert. Die Banknote 10 der Fig. 3 ist mit einem etwa 1 x 1 cm² großen, transparenten Sicherheitselement 12 und einem zugehörigen aufgedruckten Decodierelement 14 gleicher Größe versehen.

Das Sicherheitselement 12 enthält eine Information, wie eine alphanumerische Zeichenfolge, die bei Betrachtung der Banknote 10 im Auf- oder Durchlicht jedoch kaum oder gar nicht sichtbar ist. Wird die Banknote dagegen gefaltet, so dass sie im Bereich des Sicherheitselements 12 auf das Decodierelement 14 zu liegen kommt, wie in Figuren 4 und 5 gezeigt, so tritt die enthaltene Information 16 durch ein nachfolgend genauer beschriebenes Zusammenspiel des transparenten Sicherheitselements 12 mit dem Decodierelement 14 für den Betrachter klar und deutlich hervor, wie in Fig. 5 dargestellt.

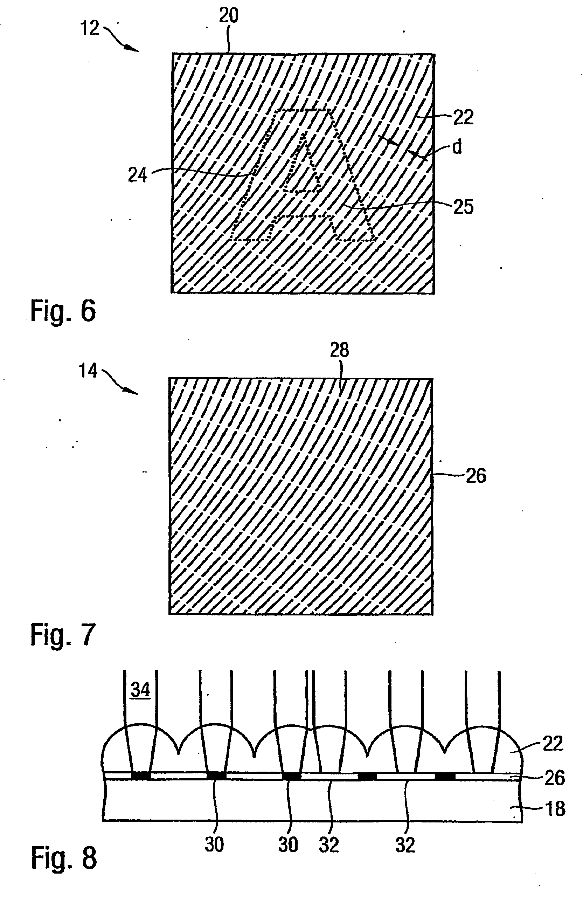

Zur näheren Erläuterung des erfindungsgemäßen Prinzips zeigen die Figuren 6 und 7 eine Aufsicht auf das Sicherheitselement 12 und das Decodierelement 14. Die beiden Figuren zeigen das Sicherheitselement und das Decodierelement in der Orientierung, in der sie in der Fig. 4 übereinander liegen. Gegenüber der Darstellung der Fig. 3 Ist das Slcherheltselement 12 durch die Faltung der Banknote somit seitenverkehrt dargestellt.

Das Sicherheitselement 12 besteht im Ausführungsbeispiel aus einer transparenten PET-Folie mit einer Dicke, die zwischen etwa 60 µm und 200 µm liegt. In die PET-Folie ist, beispielsweise mit dem weiter unten im Detail beschriebenen Verfahren, ein Oberflächenrelief in Form eines Linsenrasters 20 eingebracht.

Die einzelnen Rasterelemente 22 sind dabei durch kurze, gekrümmte Zylinderlinsen gebildet, die eine Breite von 20 µm bis 100 µm und einen typischen Abstand d von 80 µm bis 200 µm aufweisen. Dieser Abstand d wird nachfolgend auch als Rasterperiode bezeichnet.

Das Linsenraster 20 weist einen speziellen Bereich, den Codierungsbereich 24 auf, in dem die optischen Eigenschaften des Linsenrasters von den optischen Eigenschaften außerhalb des Codierungsbereichs 24 abweichen. Die veränderten optischen Eigenschaften im Codierungsbereich 24 werden im Ausführungsbeispiel dadurch erzeugt, dass die Rasterelemente 25 innerhalb des Codierungsbereichs 24 um eine halbe Rasterperiode, also um d/2, gegenüber ihrer Lage 22 außerhalb des Codierungsbereichs 24 versetzt sind.

Die Gestalt, insbesondere Form oder Umriss, des Codierungsbereichs 24 stellt eine bestimmte Information, beispielsweise ein Muster oder eine alphanumerische Zeichenfolge dar, im Ausführungsbeispiel den Buchstaben "A". Bei der gewählten kleinen Rasterperiode ist diese Versetzung in dem Sicherheitselement bei gewöhnlicher Betrachtung im Durchlicht oder Auflicht kaum oder gar nicht sichtbar.

Um die enthaltene Information auszulesen, wird das Sicherheitselement 12 auf einen angepassten Decodierbereich 26 des Decodierelements 14 gelegt. Der Decodierbereich 26 enthält in gedruckter Form dieselbe Rasterstruktur 28 wie das Linsenraster 20, allerdings ohne die informationshaltigen Versetzungen des Codierungsbereichs 24. Durch diese Abstimmung der beiden Rasterstrukturen 28 und 20 tritt die enthaltene Information aufgrund der unterschiedlichen optischen Eigenschaften des Codierungsbereichs 24 und des umliegenden Linienrasters beim Auflegen des Linsenrasters 20 auf den Decodierbereich 26 deutlich zutage.

Fig. 8 zeigt einen Querschnitt durch das auf dem Decodierbereich von Fig. 7 aufliegende Linsenraster der Fig. 6 im Bereich des Übergangs in den Codierungsbereich 24 (Detail VIII aus Fig. 4). Der Betrachter sieht bei einem im Register auf den Decodierbereich 26 des Decodierelements 14 aufgelegten Linsenraster 20 wegen der fokussierenden Wirkung der Zylinderlinsen 22 jeweils nur einen gewissen Ausschnitt des gedruckten Decodierbereichs 26. In Fig. 8 ist der sichtbare Ausschnitt bei senkrechter Betrachtungsrichtung 34 dargestellt.

Außerhalb des Codierungsbereichs 24 fällt das Linsenraster 20 des Sicherheitselements 12 mit der Rasterstruktur 28 des Decodierelements 14 zusammen, so dass der Betrachter in diesem Bereich bei senkrechter Betrachtung die geschwärzten Druckbereiche 30 sieht. Innerhalb des Codierungsbereichs 24 sind die Zylinderlinsen 22 um einen halben Rasterabstand versetzt, so dass der Betrachter dort jeweils auf den weißen Zwischenraum 32 zwischen benachbarten Schwärzungen 30 blickt. Bei dieser Ausrichtung von Sicherheitselement 12 und Decodierelement 14 erscheint die im Codierungsbereich 24 enthaltende Information somit weiß auf schwarzem Grund, wie in der Fig. 5 gezeigt.

Verschiebt der Betrachter das Sicherheitselement 12 und das Decodierelement 14 um einen halben Rasterabstand gegeneinander, so ergibt sich die umgekehrte Situation, in der im Codierungsbereich 24 die geschwärzten Druckbereiche 30, außerhalb dagegen die weißen Zwischenräume 32 sichtbar sind. Es versteht sich, dass der Kontrast oder die Farbwirkung durch Abstimmung des gerasterten Decodierbereichs und der Versetzung der Zylinderlinsen beliebig gestaltet werden kann.

Während die beschriebenen Effekte vollständig nur bei genauer Ausrichtung von Sicherheitselement 12 und Decodierelement 14 auftreten, ist die enthaltene Information bereits bei annähernd korrekter Lage für den Betrachter andeutungsweise sichtbar, wobei die gesamte Fläche des Sicherheitselements zusätzlich von einem moireartigen Muster durchzogen ist. Durch leichtes Hinund Herschieben der übereinander liegenden Banknotenteile lässt sich schnell eine korrekte Lage finden, in der das Moiremuster möglichst vollständig verschwindet und die enthaltene Information klar hervortritt. Auch ist eine passergenaue Ausrichtung der beiden Elemente nicht erforderlich, um die Information ausreichend sicher aufnehmen oder entziffern zu können.

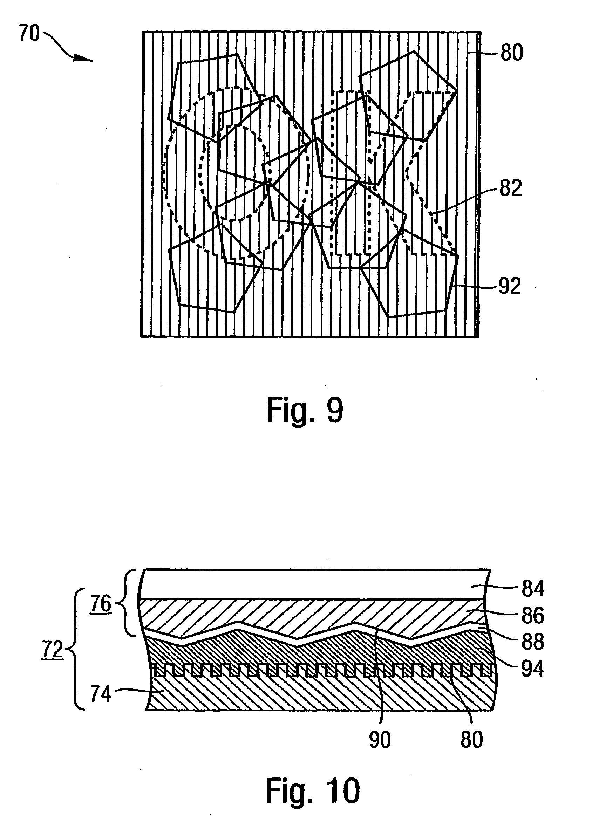

Ein weiteres Ausführungsbeispiel der Erfindung wird nunmehr mit Bezug auf die Figuren 9 und 10 erläutert. Das dort gezeigte transparente Sicherheitselement 70 kombiniert zur weiteren Erhöhung der Fälschungs- und Kopiersicherheit eine versteckte, nichtholographische Information (Bezugszeichen 82, Buchstabenfolge "OK") mit einer offenen, holographisch diffraktiven Information (Bezugszeichen 92, Fünfeckmuster).

Das transparente Sicherheitselement 70 besteht dazu aus einem Folienverbund 72 aus einer Prägefolie 74 und einer holographischen Heißlaminatfolie 76 (Fig. 10). In die Prägefolie 74 ist ein Linsenraster 80 eingeprägt, das Strukturtiefen von etwa 10 ^m und Linsenabstände von etwa 0,15 mm aufweist.

Die versteckte Information, im Ausführungsbeispiel die Buchstabenfolge "OK", ist, wie in den oben beschriebenen Beispielen, über die abweichenden optischen Eigenschaften des Linsenrasters 80 innerhalb eines Codierungsbereichs 82 in dem Sicherheitselement gespeichert. Im gezeigten Beispiel besteht das Linsenraster 80 aus parallelen geraden Zylinderlinsen, deren Lage innerhalb des Codierungsbereichs 82 um eine halbe Rasterperiode versetzt ist. Mithilfe eines Decodierelementes, beispielsweise eines Linienmusters derselben Rasterperiode, das in einem anderen Bereich einer Banknote aufgedruckt ist, oder das als separates Decodierelement vorliegt, lässt sich die versteckte Information wieder auslesen. Ohne ein solches Hilfsmittel ist die versteckte Information aufgrund der kleinen Rasterperiode jedoch praktisch nicht erkennbar.

Auf die Prägefolie 74 ist eine holographische Heißlaminatfolie 76 appliziert, die neben einer Trägerfolie 84 eine geprägte Schicht 86 mit einer hochbrechenden Beschichtung 88 aufweist. Die geprägte Schicht und die hochbrechende Beschichtung sind mit Beugungsstrukturen 90 versehen, die bei Beleuchtung des Sicherheitselements 70 eine ohne weitere Hilfsmittel sichtbare, offene, holographische Information 92 rekonstruieren. Die holographische Information stellt ein zusätzliches, schwer zu fälschendes und nicht kopierbares Sicherheitsmerkmal des Folienverbunds 72 dar.

Um die Linsenreliefoberfläche der Prägefolie 74 zu versiegeln, wird die hochbrechende Beschichtung 88 der Heißlaminatfolie 76 vor dem Aufbringen mit einer Heißkleberschicht 94 versehen und dann auf die Prägefolie 74 heißappliziert. Die Oberfläche des Linsenrasters 80 ist so untrennbar mit der Hologrammfolie verbunden und gegenüber Abformungen geschützt, da der Folienverbund 72 nicht zerlegt werden kann, ohne die holographische Information 92 zu zerstören.

Bei geeignetem Design wird die Auslesbarkeit der versteckten Information 82 nicht beeinträchtigt, lediglich der optimale Ausleseabstand zwischen dem Folienverbund und dem Decodierelement vergrößert sich. Bei Verwendung holographischer Heißlaminatfolie 76 kann die Dicke der Heißkleberschicht 94 größer als 10 ^m sein. Der Ausleseabstand vergrößert sich bei einer solchen Ausgestaltung typischerweise von etwa 0 bis 2 mm (bei unversiegeltem Linsenraster) auf etwa 5 bis 10 mm.

Anstelle einer Heißlaminatfolie kann die offene holographische Information auch in eine transparente holographische Heißprägefolie eingebracht werden. Die Heißprägefolie wird mit einem Heißkleber beschichtet, auf die Prägefolie 74 heißappliziert, und die PET-Trägerfolie der Heißprägefolie in üblicher Weise abgezogen.. Die auf dem Linsenoberflächenrelief verbleibende Schicht ist dann nur wenige Mikrometer dick. Der Ausleseabstand beträgt bei dieser Variante nach der Versiegelung typischerweise etwa 3 bis 6 mm.

Der Kleber der Heißlaminatfolie bzw. der Heißprägefolie hat einem vom Linsenoberflächenrelief abweichenden Brechungsindex, mit einem Brechungsindexunterschied mehr als 0,01. Beispielsweise kann der Unterschied An = 0,03 betragen.

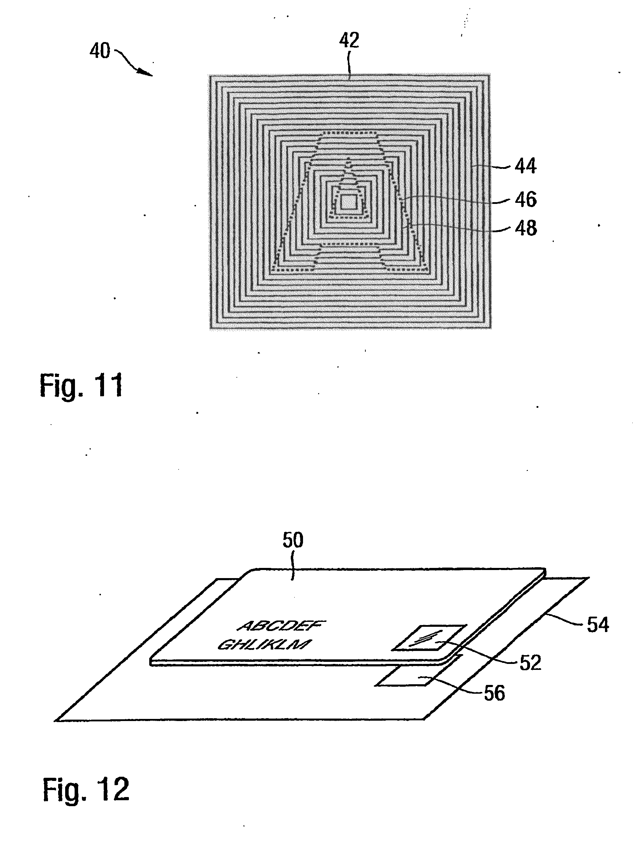

Fig. 11 zeigt ein weiteres Ausführungsbeispiel eines erfindungsgemäßen Sicherheitselements 40 mit einem Linsenraster 42, das aus einer Vielzahl geradliniger und zueinander jeweils unter einem Winkel von 90° angeordneter Zylinderlinsen 44 besteht. Das Linsenraster 42 weist einen Codierungsbereich 46 auf, der zur Illustration wieder in Form des Buchstabens "A" ausgebildet ist. In dem Codierungsbereich 46 sind die Zylinderlinsen 48 jeweils um eine halbe Rasterperiode gegenüber der Anordnung außerhalb des Codierungsbereichs 46 versetzt.
Beim Auflegen des Linsenrasters 42 auf einen nicht gezeigten Decodierbereich, der dieselbe Rasterstruktur wie das Linsenraster 42, jedoch ohne die Versetzung im Codierungsbereich 46, aufweist, tritt die in dem Linsenraster enthaltene Information, im Ausführungsbeispiel also der Buchstabe "A", für einen Betrachter deutlich sichtbar hervor.

Fig. 12 zeigt ein anderes Ausführungsbeispiel, bei dem das Decodierelement nicht Teil des das Sicherheitselement tragenden Datenträgers ist. Eine Chipkarte 50 enthält in einem transparenten Teilbereich ein erfindungsgemäßes Sicherheitselement 52, beispielsweise das Sicherheitselement 40 der Fig. 7. Das Sicherheitselement 52 weist im Ausführungsbeispiel ein kartentypspezifisches Linsenraster auf, das beispielsweise für einen bestimmten Kartenaussteller charakteristisch ist.

Das dem Sicherheitselement 52 zugehörige und auf das spezifische Linsenraster abgestimmte Decodierelement 54 ist in diesem Fall nicht Teil des Datenträgers 50 selbst, sondern liegt als separates Element den Auslesestellen, beispielsweise Banken, vor. Die in dem Sicherheitselement 52 enthaltene Information kann dort durch Auflegen der Chipkarte 50 auf den Decodierbereich 56 des Decodierelements 54 gelesen werden.

Es versteht sich, dass auch bei den Ausführungsbeispielen der Fig. 11 und 12 das Linsenraster mit einer holographischen Folie versiegelt werden kann, die eine zusätzliche offene, beugungsoptische Information enthält.

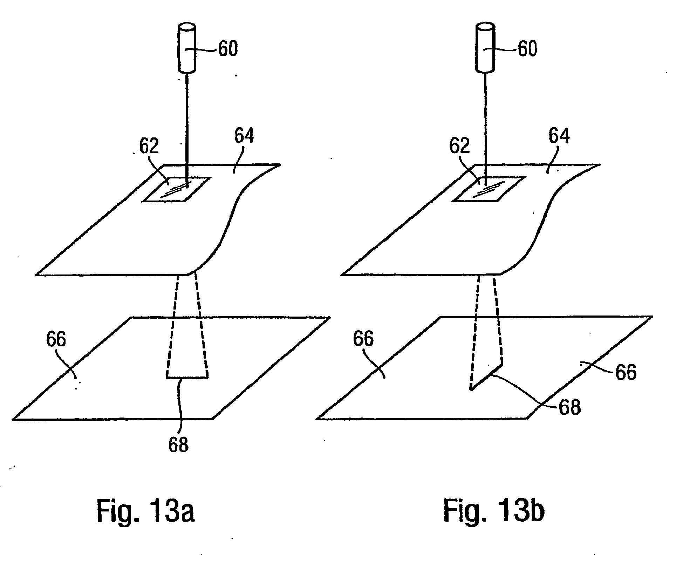

Die Echtheit der beschriebenen Sicherheitselemente mit gekrümmten oder gewinkelten Linsenrastern kann neben dem Auflegen auf einen angepassten Decodierbereich noch auf andere Weise überprüft werden, die sich besonders für eine rasche maschinelle Prüfung eignet. Diese zweite Prüfmethode, die mit Bezug auf Fig. 13 näher erläutert wird, stützt sich auf die Tatsache, dass die Zylinderlinsen der "nicht geraden", also gekrümmten oder gewinkelten Linsenraster an verschiedenen Stellen eine unterschiedliche Ausrichtung aufweisen.

Wird der punktförmige Laserstrahl eines herkömmlichen Laserpointers 60 auf ein derartiges transparentes Linsenraster 62 einer Banknote 64 gerichtet und hinter dem Raster auf einem Schirm 66 aufgefangen, so zeigt sich aufgrund der Lentikularwirkung der Zylinderlinsen ein zu einem schmalen Laserstrich 68 aufgeweiteter Laserstrahl, siehe Fig. 13(a). Da die Orientierung der Zylinderachsen über die Fläche des Linsenrasters 62 variiert, ändert sich auch die Orientierung des Laserstrichs 68 beim Schwenken des Laserstrahls über das Linsenraster entsprechend, siehe Fig. 13(b).

Die Änderung der Orientierung des Laserstrichs 68 beim Schwenken über das Linsenraster 62 kann somit als Echtheitskennzeichen für das Sicherheitselement verwendet werden. Bleibt die Orientierung des Laserstrichs 68 beim Schwenken gleich, kann auf eine Nachstellung des Sicherheitselements durch eine Linsenrasterfolie mit ausschließlich parallelen Zylinderlinsen geschlossen werden. Das Vorliegen oder Nichtvorliegen einer derartigen Orientierungsänderung kann bei der Banknotenprüfung maschinell mit hoher Geschwindigkeit geprüft werden. Dazu werden die Linsenraster mit einem Laserstrahl durchleuchtet und der aufgeweitete Laserstrich mit Photodioden erfasst. Die Lageänderung des Laserstrichs beim Schwenken des Laserstrahls über das Sicherheitselement kann so einfach gemessen und ausgewertet werden.

Die Herstellung eines oben beschriebenen Sicherheitselements 12 kann beispielsweise wie folgt durchgeführt werden: Zunächst wird eine 1 µm bis 50 µm dicke Photoresistschicht mit photollthographischer Maskentechnik oder mittels Elektronenstrahllithographie mit einem Linien- oder Punktraster aus einer Vielzahl gekrümmter Linien belichtet. Der Linienabstand bewegt sich dabei zwischen 40 µm und 500 µm, vorzugsweise zwischen 80 µm und 200 µm. Die Linienbreite wird vorteilhaft darauf abgestimmt zwischen 20 µm und 100 µm gewählt, wobei die Beleuchtungsintensität in einer Richtung senkrecht zu der Erstreckung der Linien sinusförmig variiert, um die Linien mit ihren Zwischenräumen in die Resistschicht einzuschreiben. Wie oben beschrieben, sind die Linien dabei innerhalb des Codierungsbereichs 24 um einen gewissen Wert, vorzugsweise um den halben Linienabstand d, verschoben.

Nach der Belichtung und entsprechender Entwicklung erhält man ein Linsenoberflächenraster in der Resistschicht. Anschließend wird die Photoresistschicht versilbert und galvanisch abgeformt. Die galvanisch abgeformte Matrize kann dann als Prägematrize zum Prägen unter erhöhtem Druck und bei Temperaturen von 150 bis 200 °C in thermoplastbeschichtete, transparente PET-Folien verwendet werden. Alternativ kann sie mittels eines UV-Castingprozesses auf transparente PET-Folien abgeformt werden.

Die transparente, das Oberflächenraster tragende Folie kann mit einem hochbrechenden Dielektrikum versehen werden und zusätzlich mit einem Schutzlack überzogen werden, um die Möglichkeit einer Oberflächenabformung durch Fälscher auszuschließen. Alternativ kann die Folie, wie oben beschrieben, mit einer holographischen Laminatfolie oder einer holographischen Prägefolie versiegelt werden.

Bei der Verwendung in Banknoten wird die Folie dann beispielsweise während des Papierherstellungsprozesses in das Banknotenpapier integriert. In diesem Fall ist die Folie vorzugsweise als Sicherheitsfaden mit einer Breite von wenigstens 1 mm, vorzugsweise 3 bis 5 mm, ausgeführt, der während des Blattbildungsprozesses als so genannter "Fenstersicherheitsfaden" in die Papierbahn eingebettet wird. Der Faden liegt hierbei in bestimmten Abständen, den so genannten "Fenstern", offen an der Papieroberfläche. Diese Papierbahn kann auf der den Fenstern gegenüberliegenden Oberfläche mit einer oder mehreren weiteren Papierbahnen abgedeckt sein. Vorzugsweise ist der Faden im Fensterbereich auf beiden Seiten des Papiers frei zugänglich. Alternativ wird die Banknote mit einer Öffnung versehen. Diese Öffnung kann papiertechnisch während der Herstellung der Papierbahn erzeugt werden. Alternativ wird die Öffnung nachträglich in das Banknotensubstrat 18 gestanzt. Im Bereich dieser Öffnung wird das erfindungsgemäße Sicherheitselement angeordnet, indem beispielsweise die Folie im Randbereich der Öffnung durch Kleben befestigt wird. Für den Fall, dass die Banknote aus einem Kunststoffsubstrat besteht, kann ein transparenter unbedruckter Bereich vorgesehen werden, in den das Linsenraster eingeprägt oder in dem das fertige Sicherheitselement als separates Element angeordnet wird.

Die Banknote wird in gewohnter Weise bedruckt, wobei in einem vorgegebenen Banknotenbereich der zugehörige Decodierungsbereich 26 aufgedruckt wird. Durch geeignetes Falten der Banknote kommen das Linsenraster und der Decodierbereich dann in der oben beschriebenen Weise zu Deckung, so dass die enthaltene Information gelesen werden kann.

## Patentansprüche

1. Sicherheitselement für Sicherheitspapiere und Wertdokumente, mit einer transparenten Folie mit einem Oberflächenrelief in Form eines Linsenrasters, das einen Codierungsbereich aufweist, in dem die optischen Eigenschaften des Linsenrasters von den optischen Eigenschaften des Linsenrasters außerhalb des Codierungsbereichs abweichen, und bei dem die Rasterelemente des Linsenrasters eine lang gestreckte Form mit einer longitudinalen Achse aufweisen, **dadurch gekennzeichnet, dass** das Linsenraster an verschiedenen Stellen Rasterelemente mit unterschiedlicher Ausrichtung der longitudinalen Achse enthält, und dass die Rasterelemente des Linsenrasters im Codierungsbereich gegenüber den außerhalb des Codierungsbereichs liegenden Rasterelementen versetzt sind, wobei die Rasterelemente im Codierungsbereich in einer Richtung senkrecht zu ihrer longitudinalen Achse um d/4 bis 3d/4 gegenüber den außerhalb des Codierungsbereichs liegenden Rasterelementen versetzt sind, wobei d den typischen Abstand der Rasterelemente senkrecht zur longitudinalen Achse darstellt.

2. Sicherheitselement nach Anspruch 1, **dadurch gekennzeichnet, dass** die Gestalt, insbesondere Form oder Umriss, des Codierungsbereichs eine Information, wie ein Muster oder eine Zeichenfolge, darstellt.

3. Sicherheitselement nach Anspruch 1 oder 2, **dadurch gekennzeichnet, dass** die Rasterelemente im Codierungsbereich in einer Richtung senkrecht zu ihrer longitudinalen Achse um etwa d/2 gegenüber den außerhalb des Codierungsbereichs liegenden Rasterelementen versetzt sind.

4. Sicherheitselement nach wenigstens einem der Ansprüche 1 bis 3, **dadurch gekennzeichnet, dass** die Rasterelemente einen typischen Abstand d senkrecht zur longitudinalen Achse von 40 µm bis 500 µm, bevorzugt von 80 µm bis 200 µm, aufweisen.

5. Sicherheitselement nach wenigstens einem der Ansprüche 1 bis 4, **dadurch gekennzeichnet, dass** das Linsenraster Strukturtiefen von 2 µm bis 30 µm, bevorzugt von 5 µm bis 15 µm, besonders bevorzugt von etwa 10 µm aufweist.

6. Sicherheitselement nach wenigstens einem der Ansprüche 1 bis 5, **dadurch gekennzeichnet, dass** das Linsenraster als Rasterelemente Zylinderlinsen umfasst, die in der Ebene des Linsenrasters gekrümmt sind.

7. Sicherheitselement nach wenigstens einem der Ansprüche 1 bis 6, **dadurch gekennzeichnet, dass** das Linsenraster als Rasterelemente gerade Zylinderlinsen mit unterschiedlich ausgerichteten longitudinalen Achsen umfasst.

8. Sicherheitselement nach Anspruch 6 oder 7, **dadurch gekennzeichnet, dass** die geraden oder gekrümmten Zylinderlinsen eine Breite von 10 µm bis 250 µm, bevorzugt von 40 µm bis 150 µm, aufweisen.

9. Sicherheitselement nach wenigstens einem der Ansprüche 1 bis 8, **dadurch gekennzeichnet, dass** die transparente Folie durch eine Kunststofffolie, insbesondere eine PET-Folie gebildet ist.

10. Sicherheitselement nach wenigstens einem der Ansprüche 1 bis 9, **dadurch gekennzeichnet, dass** auf den Codierungsbereich eine hochbrechende Dielektrikumsschicht aufgebracht ist.

11. Sicherheitselement nach wenigstens einem der Ansprüche 1 bis 10, **dadurch gekennzeichnet, dass** der Codierungsbereich mit einer Schutzlackschicht zur Verhinderung einer Oberflächenabformung des Codierungsbereichs versehen ist.

12. Sicherheitselement nach wenigstens einem der Ansprüche 1 bis 11, **dadurch gekennzeichnet, dass** der Codierungsbereich eine nur unter speziellen Auslesebedingungen erkennbare, versteckte Information enthält.

13. Sicherheitselement nach wenigstens einem der Ansprüche 1 bis 12, **dadurch gekennzeichnet, dass** das Sicherheitselement eine unter gewöhnlichen Auslesebedingungen erkennbare, offene beugungsoptische Information enthält.

14. Sicherheitselement nach Anspruch 13, **dadurch gekennzeichnet, dass** die offene beugungsoptische Information sich im Wesentlichen über die gesamte Fläche des Sicherheitselements erstreckt.

15. Sicherheitselement nach Anspruch 13 oder 14, **dadurch gekennzeichnet, dass** die offene beugungsoptische Information in einer transparenten Folie vorliegt, die zusammen mit der den Codierungsbereich enthaltenden Folie einen Folienverbund bildet.

16. Sicherheitselement nach Anspruch 15, **dadurch gekennzeichnet, dass** die offene beugungsoptische Information in einer transparenten holographischen Prägefolie, insbesondere einer Heißprägefolie oder einer holographischen Laminatfolie vorliegt.

17. Sicherheitselement nach Anspruch 15 oder 16, **dadurch gekennzeichnet, dass** die transparente Folie auf das Linsenraster-Oberflächenrelief aufgebracht, insbesondere über eine Klebeschicht auf das Linsenraster-Oberflächenrelief aufgeklebt ist.

18. Sicherheitselement nach Anspruch 17, **dadurch gekennzeichnet, dass** die Klebeschicht einen Brechungsindex aufweist, des sich vom Brechungsindex des Linsenraster-Oberflächenreliefs um 0,01 oder mehr, bevorzugt um 0,02 oder mehr unterscheidet.

19. Verfahren zum Herstellen eines Sicherheitselements nach wenigstens einem der Ansprüche 1 bis 18, bei dem in eine transparente Folie ein Oberflächenrelief in Form eines Linsenrasters eingebracht wird, welches einen Codierungsbereich aufweist, in dem die optischen Eigenschaften des Linsenrasters von den optischen Eigenschaften des Linsenrasters außerhalb des Codierungsbereichs abweichen, und bei dem die Rasterelemente des Linsenrasters mit einer lang gestreckten Form mit einer longitudinalen Achse ausgebildet werden, wobei das Linsenraster an verschiedenen Stellen mit Rasterelementen mit unterschiedlicher Ausrichtung der longitudinalen Achse ausgebildet wird, und die die Rasterelemente des Linsenrasters im Codierungsbereich gegenüber den außerhalb des Codierungsbereichs liegenden Rasterelementen versetzt ausgebildet werden, wobei die Rasterelemente im Codierungsbereich in einer Richtung senkrecht zu ihrer longitudinalen Achse um d/4 bis 3d/4 gegenüber den außerhalb des Codierungsbereichs liegenden Rasterelementen versetzt ausgebildet werden, wobei d den typischen Abstand der Rasterelemente senkrecht zur longitudinalen Achse darstellt.

20. Verfahren nach Anspruch 19, **dadurch gekennzeichnet, dass** das Linsenraster photolithographisch oder elektronenstrahllithographisch in einer Photoresistschicht erstellt wird und mit einem Folienprägeverfahren in eine prägbare Folie übertragen wird.

21. Verfahren nach Anspruch 20, **dadurch gekennzeichnet, dass** das Linsenraster mittels UV-Lackauftrag auf eine Mehrzahl von Folien unter gleichzeitiger oder nachfolgender UV-Lichtaushärtung abgeformt wird.

22. Verfahren nach wenigstens einem der Ansprüche 19 bis 21, **dadurch gekennzeichnet, dass** die Folie mit einer hochbrechenden Dielektrikumsschicht versehen wird.

23. Verfahren nach wenigstens einem der Ansprüche 19 bis 22, **dadurch gekennzeichnet, dass** die Folie mit einer Schutzlackschicht zur Verhinderung einer Oberflächenabformung des Codierungsbereichs versehen wird.

24. Verfahren nach wenigstens einem der Ansprüche 19 bis 23, **dadurch gekennzeichnet, dass** in den Codierungsbereich eine nur unter speziellen Auslesebedingungen erkennbare, versteckte Information eingebracht wird.

25. Verfahren nach wenigstens einem der Ansprüche 19 bis 24, **dadurch gekennzeichnet, dass** in das Sicherheitselement eine unter gewöhnlichen Auslesebedingungen erkennbare, offene beugungsoptische Information eingebracht wird.

26. Verfahren nach Anspruch 25, **dadurch gekennzeichnet, dass** die offene beugungsoptische Information in eine transparente Folie eingebracht wird, und ein Folienverbund aus der den Codierungsbereich enthaltenden Folie und der die beugungsoptische Information enthaltenden Folie gebildet wird.

27. Verfahren nach Anspruch 25 oder 26, **dadurch gekennzeichnet, dass** das Linsenraster-Oberflächenrelief mit einer Klebefolie versiegelt wird, die die offene beugungsoptische Information enthält.

28. Verfahren nach Anspruch 27, **dadurch gekennzeichnet, dass** die Klebefolie durch eine holographische Prägefolie, insbesondere einer holographischen Heißprägefolie, mit einer hochbrechenden Schicht gebildet ist.

29. Verfahren nach Anspruch 28, **dadurch gekennzeichnet, dass** die holographische Prägefolie eine Trägerfolie enthält, die nach dem Versiegeln des Linsenraster-Oberflächenreliefs abgezogen wird.

30. Verfahren nach Anspruch 27, **dadurch gekennzeichnet, dass** die Klebefolie heiß oder kalt auf das Linsenraster-Oberflächenrelief laminiert wird,

31. Sicherheitsanordnung für Sicherheitspapiere und Wertdokumente, mit
- einem Sicherheitselement nach einem der Ansprüche 1 bis 18 und
- einem Decodierelement mit einem Decodierbereich, der so auf das Linsenraster des Sicherheitselements abgestimmt ist, dass eine in dem Codierungsbereich des Sicherheitselements enthaltene Information durch Auflegen des Linsenrasters auf den Decodierbereich auslesbar ist.

32. Sicherheitsanordnung nach Anspruch 31, **dadurch gekennzeichnet, dass** der Decodierbereich des Decodierelements eine Druckschicht umfasst.

33. Sicherheitsanordnung nach Anspruch 31 oder 32, **dadurch gekennzeichnet, dass** der Decodierbereich des Decodierelements eine Beugungsstruktur umfasst.

34. Sicherheitsanordnung nach wenigstens einem der Ansprüche 31 bis 33, **dadurch gekennzeichnet, dass** der Decodierbereich des Decodierelements ein Rastermuster enthält, das dem Linsenraster des Sicherheitselements ohne die Abweichungen durch den informationstragenden Codierungsbereich entspricht.

35. Datenträger, insbesondere Wertdokument, wie Banknote oder Ausweiskarte, mit einem Sicherheitselement nach einem der Ansprüche 1 bis 18, wobei das Sicherheitselement in einem transparenten Bereich des Datenträgers angeordnet ist.

36. Datenträger nach Anspruch 35, mit einer Sicherheitsanordnung nach einem der Ansprüche 31 bis 34, wobei der Datenträger bevorzugt flexibel ist, so dass das Linsenraster des Sicherheitselements zum Auslesen der enthaltenen Information durch Biegen oder Falten des Datenträgers auf den Decodierbereich des Decodierelements auflegbar ist.

37. Verfahren zur Echtheitsprüfung eines Sicherheitselements nach wenigstens einem der Ansprüche 1 bis 18, bei dem
- das Linsenraster des Sicherheitselements mit einem Lichtstrahl, insbesondere einem Laserstrahl beaufschlagt wird,
- der durch das Linsenraster gebeugte oder gebrochene Lichtstrahl aufgefangen wird, und
- auf Grundlage von Form, Lage und/ oder Orientierung des aufgefangenen Lichtstrahls die Echtheit des Sicherheitselements beurteilt wird.

38. Verfahren nach Anspruch 37, **dadurch gekennzeichnet, dass** das Linsenraster an verschiedenen Stellen mit dem Lichtstrahl beaufschlagt wird, und die Echtheit des Sicherheitselements aufgrund der sich für das Sicherheitselement dabei in charakteristischer Weise ändernden Form, Lage und/oder Orientierung des aufgefangenen Lichtstrahls beurteilt wird.

## Claims

1. A security element for security papers and value documents, having a transparent foil having a surface relief in the form of a lens grid that exhibits a code region in which the optical properties of the lens grid differ from the optical properties of the lens grid outside the code region, and in which the grid elements of the lens grid exhibit an elongated shape having a longitudinal axis, **characterized in that** the lens grid includes, at different locations, grid elements having different orientations of the longitudinal axis, and that the grid elements of the lens grid in the code region are offset with respect to the grid elements that lie outside the code region, with the grid elements in the code region being offset in a direction perpendicular to their longitudinal axis by d/4 to 3d/4 with respect to the grid elements that lie outside the code region, where d represents the typical distance of the grid elements perpendicularly to the longitudinal axis.

2. The security element according to claim 1, **characterized in that** the design, especially shape or contour, of the code region depicts a piece of information, such as a pattern or a character string.

3. The security element according to claim 1 or **2, characterized in that** the grid elements in the code region are offset in a direction perpendicular to their longitudinal axis by about d/2, with respect to the grid elements that lie outside the code region.

4. The security element according to at least one of claims 1 to 3, **characterized in that** the grid elements exhibit a typical distance d perpendicularly to the longitudinal axis of 40 µm to 500 µm, preferably of 80 µm to 200 µm.

5. The security element according to at least one of claims 1 to 4, **characterized in that** the lens grid exhibits pattern depths of 2 µm to 30 µm, preferably of 5 µm to 15 µm, particularly preferably of about 10 µm.

6. The security element according to at least one of claims 1 to 5, **characterized in that** the lens grid comprises, as grid elements, cylindrical lenses that are curved in the plane of the lens grid.

7. The security element according to at least one of claims 1 to 6, **characterized in that** the lens grid comprises, as grid elements, straight cylindrical lenses having differently oriented longitudinal axes.

8. The security element according to claim 6 or 7, **characterized in that** the straight or curved cylindrical lenses exhibit a width of 10 µm to 250 µm, preferably of 40 µm to 150 µm.

9. The security element according to at least one of claims 1 to 8, **characterized in that** the transparent foil is formed by a plastic foil, especially a PET foil.

10. The security element according to at least one of claims 1 to 9, **characterized in that** a high-index dielectric layer is applied to the code region.

11. The security element according to at least one of claims 1 to 10, **characterized in that** the code region is provided with a protective lacquer layer to prevent a surface reproduction of the code region.

12. The security element according to at least one of claims 1 to 11, **characterized in that** the code region includes a hidden piece of information that is perceptible only under special readout conditions.

13. The security element according to at least one of claims 1 to 12, **characterized in that** the security element includes an open diffraction optical piece of information that is perceptible under ordinary readout conditions.

14. The security element according to claim 13, **characterized in that** the open diffraction optical piece of information extends substantially across the entire area of the security element.

15. The security element according to claim 13 or 14, **characterized in that** the open diffraction optical piece of information is present in a transparent foil that, together with the foil that includes the code region, forms a foil composite.

16. The security element according to claim 15, **characterized in that** the open diffraction optical piece of information is present in a transparent holographic stamping foil, especially a hot stamping foil or a holographic laminating foil.

17. The security element according to claim 15 or 16, **characterized in that** the transparent foil is applied to the lens grid surface relief, especially is affixed to the lens grid surface relief via an adhesive layer.

18. The security element according to claim 17, **characterized in that** the adhesive layer exhibits a refractive index that differs from the refractive index of the lens grid surface relief by 0.01 or more, preferably by 0.02 or more.

19. A method for manufacturing a security element according to at least one of claims 1 to 18, in which there is introduced into a transparent foil a surface relief, in the form of a lens grid, that exhibits a code region in which the optical properties of the lens grid differ from the optical properties of the lens grid outside the code region, and in which the grid elements of the lens grid are formed having an elongated shape having a longitudinal axis, the lens grid being formed having, at different locations, grid elements having different orientations of the longitudinal axis, and the grid elements of the lens grid in the code region are formed offset with respect to the grid elements that lie outside the code region, with the grid elements in the code region being formed offset in a direction perpendicular to their longitudinal axis by d/4 to 3d/4 with respect to the grid elements that lie outside the code region, where d represents the typical distance of the grid elements perpendicularly to the longitudinal axis.

20. The method according to claim 19, **characterized in that** the lens grid is created photolithographically or electron beam lithographically in a photoresist layer and is transferred with a foil stamping method to a stampable foil.

21. The method according to claim 20, **characterized in that** the lens grid is reproduced by means of UV lacquer application to a plurality of foils under simultaneous or subsequent UV light curing.

22. The method according to at least one of claims 19 to 21, **characterized in that** the foil is provided with a high-index dielectric layer.

23. The method according to at least one of claims 19 to 22, **characterized in that** the foil is provided with a protective lacquer layer to prevent a surface reproduction of the code region.

24. The method according to at least one of claims 19 to 23, **characterized in that** a hidden piece of information that is perceptible only under special readout conditions is introduced into the code region.

25. The method according to at least one of claims 19 to 24, **characterized in that** an open diffraction optical piece of information that is perceptible under ordinary readout conditions is introduced into the security element.

26. The method according to claim 25, **characterized in that** the open diffraction optical piece of information is introduced into a transparent foil, and a foil composite is formed from the foil that includes the code region and the foil that includes the diffraction optical piece of information.

27. The method according to claim 25 or 26, **characterized in that** the lens grid surface relief is sealed with an adhesive foil that contains the open diffraction optical piece of information.

28. The method according to claim 27, **characterized in that** the adhesive foil is formed by a holographic stamping foil, especially a holographic hot stamping foil, having a high-index layer.

29. The method according to claim 28, **characterized in that** the holographic stamping foil includes a substrate foil that is removed following the sealing of the lens grid surface relief.

30. The method according to claim 27, **characterized in that** the adhesive foil is laminated hot or cold onto the lens grid surface relief.

31. A security arrangement for security papers and value documents, having
- a security element according to one of claims 1 to 18 and
- a decoding element having a decoding region that is coordinated with the lens grid of the security element in such a way that a piece of information that is included in the code region of the security element is readable by laying the lens grid on the decoding region.

32. The security arrangement according to claim 31, **characterized in that** the decoding region of the decoding element comprises a printing layer.

33. The security arrangement according to claim 31 or 32, **characterized in that** the decoding region of the decoding element comprises a diffraction pattern.

34. The security arrangement according to at least one of claims 31 to 33, **characterized in that** the decoding region of the decoding element includes a grid pattern that corresponds to the lens grid of the security element without the differences due to the information-bearing code region.

35. A data carrier, especially a value document, such as a banknote or identification card, having a security element according to one of claims 1 to 18, the security element being arranged in a transparent region of the data carrier.

36. The data carrier according to claim 35, having a security arrangement according to one of claims 31 to 34, the data carrier preferably being flexible, such that, to read out the included information, the lens grid of the security element is layable on the decoding region of the decoding element by bending or folding the data carrier.

37. A method for checking the authenticity of a security element according to at least one of claims 1 to 18, in which
- the lens grid of the security element is impinged on with a light beam, especially a laser beam,
- the light beam that is diffracted or refracted by the lens grid is collected, and
- the authenticity of the security element is assessed based on the shape, position and/ or orientation of the collected light beam.

38. The method according to claim 37, **characterized in that** the lens grid is impinged on at different locations with the light beam, and the authenticity of the security element is assessed based on the, for the security element characteristically, changing shape, position and/or orientation of the collected light beam.

## Revendications

1. Elément de sécurité pour papiers de sécurité et documents de valeur, comportant une feuille transparente ayant un relief superficiel sous forme d'une trame lenticulaire, qui comprend une zone de codage dans laquelle les propriétés optiques de la trame lenticulaire diffèrent des propriétés optiques de la trame lenticulaire à l'extérieur de la zone de codage, et les éléments de trame de la trame lenticulaire présentant une forme en extension longitudinale, ayant un axe longitudinal, **caractérisé en ce que** la trame lenticulaire contient, en différents points, des éléments de trame ayant différentes orientations de l'axe longitudinal, et **en ce que** les éléments de trame de la trame lenticulaire sont, dans la zone de codage, décalés par rapport aux éléments de trame situés à l'extérieur de la zone de codage, et les éléments de trame étant, dans la zone de codage, décalés, dans une direction perpendiculaire à leur axe longitudinal de d/4 à 3d/4 par rapport aux éléments de trame situés à l'extérieur de la zone de codage, d représentant l'écartement typique des éléments de trame perpendiculairement à l'axe longitudinal.

2. Elément de sécurité selon la revendication 1, **caractérisé en ce que** la configuration, en particulier la forme ou le contour, de la zone de codage représente une information, telle qu'un modèle ou une séquence de caractères.

3. Elément de sécurité selon la revendication 1 ou 2, **caractérisé en ce que** les éléments de trame sont, dans la zone de codage, décalés, dans une direction perpendiculaire à leur axe longitudinal d'environ d/2 par rapport aux éléments de trame situés à l'extérieur de la zone de codage.

4. Elément de sécurité selon au moins l'une des revendications 1 à 3, **caractérisé en ce que** les éléments de trame présentent un écartement typique d, perpendiculairement à l'axe longitudinal, de 40 µm à 500 µm, de préférence de 80 µm à 200 µm.

5. Elément de sécurité selon au moins l'une des revendications 1 à 4, **caractérisé en ce que** la trame lenticulaire présente des profondeurs de structure de 2 µm à 30 µm, de préférence de 5 µm à 15 µm, d'une manière particulièrement préférée d'environ 10 µm.

6. Elément de sécurité selon au moins l'une des revendications 1 à 5, **caractérisé en ce que** la trame lenticulaire comprend en tant qu'éléments de trame des lentilles cylindriques, qui sont courbées dans le plan de la trame lenticulaire.

7. Elément de sécurité selon au moins l'une des revendications 1 à 6, **caractérisé en ce que** la trame lenticulaire comprend en tant qu'éléments de trame des lentilles cylindriques droites ayant des axes longitudinaux diversement orientés.

8. Elément de sécurité selon la revendication 6 ou 7, **caractérisé en ce que** les lentilles cylindriques droites ou courbées ont une largeur de 10 µm à 250 µm, de préférence de 40 µm à 150 µm.

9. Elément de sécurité selon au moins l'une des revendications 1 à 8, **caractérisé en ce que** la feuille transparente est formée d'une feuille plastique, notamment d'une feuille de PET.

10. Elément de sécurité selon au moins l'une des revendications 1 à 9, **caractérisé en ce qu'**une couche diélectrique à grand indice de réfraction est appliquée sur la zone de codage.

11. Elément de sécurité selon au moins l'une des revendications 1 à 10, **caractérisé en ce que** la zone de codage est pourvue d'un vernis de protection, pour empêcher une empreinte superficielle de la zone de codage.

12. Elément de sécurité selon au moins l'une des revendications 1 à 11, **caractérisé en ce que** la zone de codage contient une information cachée, qui ne peut être reconnue que dans des conditions spéciales de lecture.

13. Elément de sécurité selon au moins l'une des revendications 1 à 12, **caractérisé en ce que** l'élément de sécurité contient une information ouverte de diffraction, pouvant être reconnue dans des conditions usuelles de lecture.

14. Elément de sécurité selon la revendication 13, **caractérisé en ce que** l'information ouverte de diffraction s'étend pour l'essentiel sur toute la surface de l'élément de sécurité.

15. Elément de sécurité selon la revendication 13 ou 14, **caractérisé en ce que** l'information ouverte de diffraction est présente dans une feuille transparente qui, avec la feuille contenant la zone de codage, forme un composite constitué de feuilles.

16. Elément de sécurité selon la revendication 15, **caractérisé en ce que** l'information ouverte de diffraction est présente dans une feuille d'estampage holographique transparente, en particulier une feuille d'estampage à chaud ou une feuille stratifiée holographique.

17. Elément de sécurité selon la revendication 15 ou 16, **caractérisé en ce que** la feuille transparente est appliquée sur le relief superficiel de la trame lenticulaire, et en particulier est collée sur le relief superficiel de la trame lenticulaire par l'intermédiaire d'une couche adhésive.

18. Elément de sécurité selon la revendication 17, **caractérisé en ce que** la couche adhésive a un indice de réfraction qui diffère de l'indice de réfraction du relief superficiel de la trame lenticulaire de 0,01 ou plus, de préférence de 0,02 ou plus.

19. Procédé de fabrication d'un élément de sécurité selon au moins l'une des revendications 1 à 18, dans lequel on incorpore dans une feuille transparente un relief superficiel sous forme d'une trame lenticulaire, qui présente une zone de codage dans laquelle les propriétés optiques de la trame lenticulaire diffèrent des propriétés optiques de la trame lenticulaire à l'extérieur de la zone de codage, et les éléments de trame de la trame lenticulaire étant configurés avec une forme en extension longitudinale ayant un axe longitudinal, la trame lenticulaire étant, en différents points, configurée avec des éléments de trame ayant différentes orientations de l'axe longitudinal, les éléments de trame de la trame lenticulaire étant, dans la zone de codage, formés décalés par rapport aux éléments de trame situés à l'extérieur de la zone de codage, et les éléments de trame étant, dans la zone de codage, formés décalés, dans une direction perpendiculaire à leur axe longitudinal de d/4 à 3d/4 par rapport aux éléments de trame situés à l'extérieur de la zone de codage, d représentant l'écartement typique des éléments de trame perpendiculairement à l'axe longitudinal.

20. Procédé selon la revendication 19, **caractérisé en ce que** la trame lenticulaire est réalisée par photolithographie ou par lithographie par faisceau d'électrons dans une couche de photoréserve, et est transférée, par un procédé d'estampage de feuilles, dans une feuille estampable.

21. Procédé selon la revendication 20, **caractérisé en ce que** la trame lenticulaire est, par application d'un vernis durcissant aux UV, gaufré sur un grand nombre de feuilles, un durcissement à la lumière UV étant effectué en même temps, ou après coup.

22. Procédé selon au moins l'une des revendications 19 à 21, **caractérisé en ce que** la feuille est pourvue d'une couche diélectrique à grand indice de réfraction.

23. Procédé selon au moins l'une des revendications 19 à 22, **caractérisé en ce que** la feuille est pourvue d'une couche de vernis de protection pour empêcher un gaufrage superficiel de la zone de codage.

24. Procédé selon au moins l'une des revendications 19 à 23, **caractérisé en ce qu'**on incorpore dans la zone de codage une information cachée, qui ne peut être reconnue que dans des conditions spéciales de lecture.

25. Procédé selon au moins l'une des revendications 19 à 24, **caractérisé en ce qu'**on introduit dans l'élément de sécurité une information ouverte de diffraction, pouvant être reconnue dans des conditions usuelles de lecture.

26. Procédé selon la revendication 25, **caractérisé en ce que** l'information ouverte de diffraction est incorporée dans une feuille transparente, et un composite de feuilles étant formé de la feuille contenant la zone de codage et de la feuille contenant l'information de diffraction.

27. Procédé selon la revendication 25 ou 26, **caractérisé en ce que** le relief superficiel de la trame lenticulaire est scellé à l'aide d'une feuille adhésive qui contient l'information ouverte de diffraction.

28. Procédé selon la revendication 27, **caractérisé en ce que** la feuille adhésive est formée d'une feuille d'estampage holographique, en particulier d'une feuille d'estampage holographique à chaud, portant une couche à grand indice de réfraction.

29. Procédé selon la revendication 28, **caractérisé en ce que** la feuille d'estampage holographique contient une feuille support, qui est enlevée par pelage après le scellage du relief superficiel de la trame lenticulaire.

30. Procédé selon la revendication 27, **caractérisé en ce que** la feuille adhésive est laminée à chaud ou à froid sur le relief superficiel de la trame lenticulaire.

31. Arrangement de sécurité pour papiers de sécurité et documents de valeur, comportant
- un élément de sécurité selon l'une des revendications 1 à 18,
- un élément de décodage, comportant une zone de décodage, qui est adaptée à la trame lenticulaire de l'élément de sécurité de façon qu'une information contenue dans la zone de codage de l'élément de sécurité puisse être lue par application de la trame lenticulaire sur la zone de décodage.

32. Arrangement de sécurité selon la revendication 31, **caractérisé en ce que** la zone de décodage de l'élément de décodage comprend une couche d'impression.

33. Arrangement de sécurité selon la revendication 31 ou 32, **caractérisé en ce que** la zone de décodage de l'élément de décodage comprend une structure de diffraction.

34. Arrangement de sécurité selon au moins l'une des revendications 31 à 33, **caractérisé en ce que** la zone de décodage de l'élément de décodage contient un échantillon de trame, qui correspond à la trame lenticulaire de l'élément de sécurité sans les écarts dus à la zone de codage portant l'information.

35. Support de données, en particulier document de valeur, tels que billet de banque ou carte d'identité, comportant un élément de sécurité selon l'une des revendications 1 à 18, l'élément de sécurité étant disposé dans une zone transparente du support de données.

36. Support de données selon la revendication 35, comportant un arrangement de sécurité selon l'une des revendications 31 à 34, le support de données étant de préférence souple de telle sorte que la trame lenticulaire de l'élément de sécurité puisse, pour la lecture de l'information qui y est contenue, être appliquée par pliage ou cintrage sur la zone de décodage de l'élément de décodage.

37. Procédé pour contrôler l'authenticité d'un élément de sécurité selon au moins l'une des revendications 1 à 18, dans lequel :
- on expose la trame lenticulaire de l'élément de sécurité à un faisceau lumineux, en particulier à un faisceau laser,
- on capte le faisceau lumineux diffracté ou réfracté par la trame lenticulaire, et
- sur la base de la forme, de la position et/ou de l'orientation du faisceau lumineux capté, on évalue l'authenticité de l'élément de sécurité.

38. Procédé selon la revendication 37, **caractérisé en ce que** la trame lenticulaire est exposée au faisceau lumineux en différents points, et l'authenticité de l'élément de sécurité est évaluée sur la base de la forme, de la position et/ou de l'orientation du faisceau lumineux capté, qui varient alors d'une manière caractéristique pour l'élément de sécurité.
